# EUROPEAN PATENT SPECIFICATION

(11) **EP 4 699 022 B1**
(45) Date of publication and mention of the grant of the patent: **11.11.2026**
(21) Application number: 24702380.7
(22) Date of filing: 01.02.2024
(51) Int. Cl.: G06F 21/32, G06V 40/70, G06V 40/16

(54) **BIOMETRICALLY AUTHENTICATING A PERSON**
BIOMETRISCHE AUTHENTIFIZIERUNG EINER PERSON
AUTHENTIFICATION BIOMÉTRIQUE D'UNE PERSONNE

(30) Priority: 28.12.2023 EP 23383398
(43) Date of publication of application: 25.02.2026
(73) Proprietor: Veridas Digital Authentication Solutions, S.L., 31192 Tajonar (ES)
(72) Inventor: AZANZA LADRÓN, Eduardo, 31192 TAJONAR (ES); ARANA REMÍREZ, Carlos, 31192 TAJONAR (ES); ARBONA PUÉRTOLAS, Leire, 31192 TAJONAR (ES); OLCOZ BASARTE, Iñigo, 31192 TAJONAR (ES); MORIONES IDIAZABAL, Elsa, 31192 TAJONAR (ES); ARROABARREN ALEMAN, Ixone, 31192 TAJONAR (ES)
(74) Representative: ZBM Patents - Zea, Barlocci & Markvardsen
(86) International application number: PCT/EP2024/052504
(87) International publication number: WO 2025/140792

(56) References cited:
- JP-A- 2023 182 613
- US-A1- 2017 161 750
- US-A1- 2019 266 427
- US-A1- 2021 287 469

## Description

This application claims the benefit of European Patent Application EP23383398.7 filed 28 December 2023.

The present disclosure relates to methods of biometrically authenticating a person, and to systems and computer programs suitable for performing said methods.

### BACKGROUND

Systems are known to control access to spaces such as buildings, offices, parkings, transport stations, stadiums, etc., or to authorize the use of certain functionalities or software or e-services such as online banking, e-learning platforms, corporative networks, etc. Some of these control systems are based on biometric analysis of the person to be authenticated in such a manner that, in case of successful validation or identification, the person results authorized to access corresponding space or service or whatever.

Biometric authentication involves processing personal or body features such as those related to fingerprints, eyes, face, voice, etc. These personal features are transformed into sensitive data uniquely identifying the person to be authenticated, or at least it is tried to obtain a biometric artifact (e.g., biometric vector) to be used as unique identifier of the person. It is known that companies or organizations or entities, either public or private, that need to control access to spaces or installations or computing platforms or any kind of service or platform have some kind permission to use such sensitive data of involved people or staff. This permission may be obtained through, e.g., private (one-to-one) agreement, collective agreement, or any kind of settlement with involved people or staff to be biometrically authenticated, or simply by virtue of a law or regulation at pertinent country.

An object of this disclosure is to provide new methods, systems and computer programs aimed at improving prior art manners of biometrically authenticating a person.

JP2023-182613 A discloses a biometric authentication using electronic devices, such as facial, iris, or fingerprints, is a convenient and efficient method of authenticating users of electronic devices.

US 2017/0161750 A1 discloses a system for identity authentication. Identity authentication is performed on biometric information, to determine whether a user has an operation authority corresponding to a two-dimensional code.

US 2019/0266427 A1 relates to an authentication technology using biometric information. An electronic apparatus performs object recognition. The electronic apparatus searches for a specified object within an obtained image. The specified object is an iris in the case of iris authentication and a face in the case of face authentication.

US 2021/287469 A1 discloses that a facial recognition module, upon determining that a tamper event is taking place, deletes or corrupts all internally stored data, or even temporarily or permanently renders the facial recognition module inoperable.

This object is solved by the subject-matter of the independent claims.

Preferred embodiments are defined in the dependent claims.

### SUMMARY

In an aspect, methods are provided of biometrically authenticating a person by a system including an acceptance module and a biometric module which remains deactivated by default. These methods (also denominated authenticating methods herein) comprise receiving input from the person at the acceptance module indicating that the person accepts to be biometrically authenticated and, in response to the reception of the input at the acceptance module, activating the biometric module to perform biometric authentication of the person. Authenticating methods further comprise, in response to completion of the biometric authentication of the person by the biometric module (either successfully or unsuccessfully) deactivating the biometric module.

Acceptance module may implement any kind of input reception known in prior art. Biometric module may implement any kind of already known biometric authentication such as, e.g., fingerprint biometrics, eye biometrics, voice biometrics, etc.

An advantage of these authenticating methods is that energy consumption is reduced and useful life of hardware executing authenticating methods is increased, since inactivity of the biometric module necessarily implies that the number of biometrically processed samples is substantially reduced. Such samples may be, e.g., fingerprint samples, face photo/video samples, eye photo/video samples, voice recording samples, etc.

Another advantage is that involuntary biometric processing is avoided because the biometric module operates only upon acceptance by the person to be biometrically authenticated. In other words, it is guaranteed that the user/person to be authenticated is using the system voluntarily. This voluntariness may be very important in jurisdictions where biometric authentication is regulated requiring voluntary acceptance thereof. Current Al regulatory guidelines provided by, for example, the European Union may be fulfilled with authenticating methods and systems according to present disclosure.

A further advantage of proposed authenticating methods is that accidental activation of biometric module is prevented in spaces with limited space such as interior access to buildings (meeting rooms, hotel rooms, etc.).

In examples, the acceptance module may include a physical button or switch, or a virtual button or icon on a touch screen, or a proximity sensor activable by hand approach, or any combination thereof. Operation of the physical button or switch may indicate acceptance by the person to be biometrically authenticated. Touching of the virtual button or icon may indicate acceptance by the person to be biometrically authenticated. Activation of the proximity sensor may indicate acceptance by the person to be biometrically authenticated. The proximity sensor may be a short range or short distance proximity sensor to minimize risk of accidental input reception by acceptance module.

The acceptance module may alternatively or additionally include an authentication-factor reader or detector to implement a multi-factor authentication approach, which may be based on triggering the biometric authentication only when or only if an authentication-factor has been previously read or detected by the authentication-factor reader or detector. Such a factor may be, e.g., a QR code or an NFC transmittable code implementing credentials of the person to be authenticated. The authentication-factor reader or detector may thus be a QR reader (if authentication-factor is QR code) or an NFC reader (if authentication-factor is NFC transmittable code), etc. In any case, QR code or NFC code or whatever code may be presentable to the authentication-factor reader or detector through, e.g., a physical card or a mobile device (e.g., a smartphone).

In some implementations, the biometric module may be based on face recognition. Taking this into account, the acceptance module and the biometric module may be arranged to each other in such a manner that an average person can show or expose his/her face to the biometric module and reach the acceptance module by his/her hand simultaneously. In particular, the acceptance module and the biometric module may be arranged at a distance of between 0 cm and 100 cm to each other, preferably between 30 cm and 50 cm to each other.

In some configurations, the performing of the biometric authentication of the person may include detecting presence of an object at a predefined distance from the biometric module and, in response to said detecting of the presence of the object, biometrically authenticating the person based on face recognition assuming that face of the person is shown or exposed to the biometric module. In particular, such a predefined distance may be of 1 meter or below. Such a presence detection may be implemented in any manner known in prior art. Face of the person may also be validated and required to be within a predetermined distance which may be the same as, above or below the predefined distance used to detect presence of the object.

According to examples, the detecting of the presence of the object at the predefined distance from the biometric module may be performed based on a single-channel camera included in the biometric module. Such a single-channel camera may be, e.g., an RGB or BW or IR camera. A single-channel image (e.g., RGB or BW or IR image) may be obtained by the single-channel camera, a human face may be identified in the obtained single-channel image, and the presence of the human face (object) at the predefined distance may be detected depending on a size of the identified human face (e.g., compared to an average face size). In this approach based on a single-channel camera (also denominated single-channel approach herein), the person may be biometrically authenticated depending on the human face identified in the single-channel image from the single-channel camera. Human face identification may be implemented based on any already known method or technique aimed at that end.

Alternatively to the single-channel approach, the detecting of the presence of the object at the predefined distance from the biometric module may be performed based on a stereoscopic camera included in the biometric module. In this case, a stereoscopic image including a bidimensional image and a depth map may be obtained by the stereoscopic camera, and the presence of the object at the predefined distance may be detected depending on the depth map. In this approach based on stereoscopic camera (also denominated stereoscopic approach herein), a human face may be identified in the bidimensional image included in the stereoscopic image, and the person may be biometrically authenticated depending on the human face identified in the bidimensional image from the stereoscopic camera. Depth map may be processed in any manner known in prior art to detect object presence. Bidimensional image may be, e.g., an RGB or BW or IR image, of same or similar type as the single-channel image in the above single-channel approach. Human face identification in the bidimensional image may be implemented based on any method or technique already known aimed at that goal.

In some examples, biometrics uniquely identifying the person to be authenticated may be calculated based on the depth map or depth channel, or based on any other available channel (RGB, BW, IR or similar) in the stereoscopic or stereo image, as long as the region used in the depth channel to determine distances from the stereo camera is mappable to said other channel.

In a further aspect, systems are provided for biometrically authenticating a person. Such systems (also denominated authenticating systems herein) comprise an acceptance module and a biometric module. The acceptance module is configured to receive input from the person indicating that the person accepts to be biometrically authenticated and, in response to said reception of the input, to activate the biometric module to perform biometric authentication of the person. The biometric module is configured to remain deactivated by default, to perform biometric authentication of the person when activated by the acceptance module and, in response to completion of the biometric authentication of the person, to be deactivated.

Authenticating systems are suitable or configured to perform authenticating methods proposed herein, so same or similar functional principles and advantages as the ones described with reference to authenticating methods may be attributed to such authenticating systems.

In examples, authentication devices for authenticating a person are provided comprising an authenticating system for biometrically authenticating a person, such as the ones disclosed in other parts of the disclosure, and one or more alternative systems for authenticating a person non-biometrically. These authentication devices permit authenticating a person's identity either biometrically (if accepted by person at acceptance module) or non-biometrically (through any of the one or more alternative systems). Full and flexible authentication functions are thus provided by said authentication devices, since a person's identity may be authenticated in any manner freely accepted or selected by the person. The one or more alternative systems may be based on any non-biometric authentication technique known in the prior art such as, e.g., through a barcode, or a QR code, or input of user credentials (e.g., username and password), etc.

In a still further aspect, computer programs are provided comprising program instructions for causing a system or computer system or controller to perform (authenticating) methods of biometrically authenticating a person, such as those described in other parts of the disclosure. These computer programs (also denominated authenticating computer programs herein) may be embodied on a storage medium and/or carried on a carrier signal. Authenticating computer programs are suitable or configured to perform authenticating methods proposed herein, so same or similar functional fundamentals and advantages as the ones described with reference to authenticating methods may be attributed to such authenticating computer programs.

In a yet further aspect, computing systems are provided for biometrically authenticating a person, said computing systems comprising a memory and a processor, embodying instructions stored in the memory and executable by the processor, and the instructions comprising functionality or functionalities to execute methods of biometrically authenticating a person, such as those described in other parts of the disclosure. Such computing systems (also denominated authenticating computing systems herein) are suitable or configured to perform authenticating methods described herein, so same or similar functional principles and advantages as the ones described with reference to authenticating methods may be attributed to such authenticating computing systems.

### BRIEF DESCRIPTION OF THE DRAWINGS

Non-limiting examples of the disclosure will be described in the following, with reference to the appended drawings, in which:
Figure 1 is a block diagram schematically illustrating (authenticating) systems for biometrically authenticating a person according to examples.
Figure 2 is a flow chart schematically illustrating (authenticating) methods of biometrically authenticating a person according to examples.
Figure 3 is a block diagram schematically illustrating (authenticating) systems for biometrically authenticating a person according to other examples.
Figure 4 is a flow chart schematically illustrating (authenticating) methods of biometrically authenticating a person according to other examples.
Figure 5 is a block diagram schematically illustrating (authenticating) systems for biometrically authenticating a person according to further examples.
Figure 6 is a flow chart schematically illustrating (authenticating) methods of biometrically authenticating a person according to further examples.

### DETAILED DESCRIPTION OF EXAMPLES

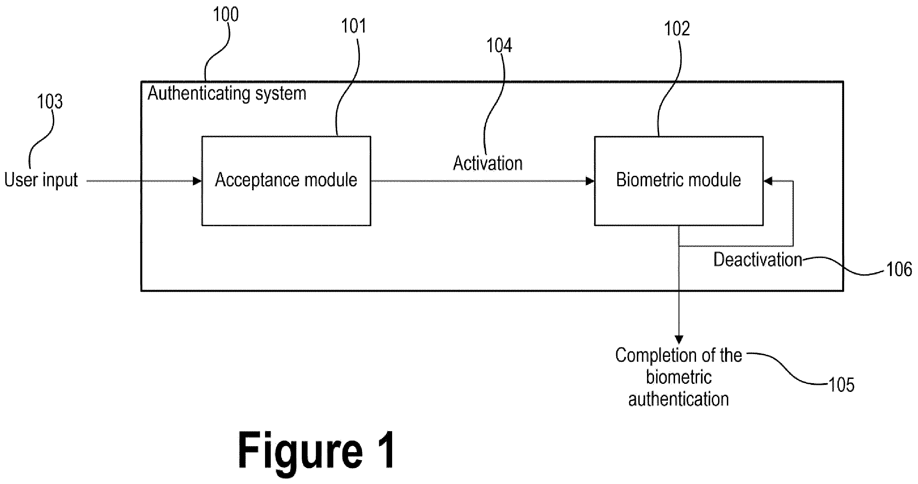

Figure 1 is a block diagram schematically illustrating (authenticating) systems 100 for biometrically authenticating a person, according to examples. As shown in the figure, such authenticating systems 100 may include an acceptance module 101 and a biometric module 102.

The acceptance module 101 may be configured to receive input 103 from the person indicating that the person accepts to be biometrically authenticated and, in response to said input reception, to activate the biometric module 102 to perform biometric authentication of the person. Said activation may be implemented based on, e.g., sending or providing, by the acceptance module 101, an activation signal 104 to the biometric module 102. Such an input reception indicating biometric acceptance may be implemented based on any already known method or technique aimed at that purpose. Specific manners of doing so are proposed herein, which are explained in other parts of the disclosure.

The biometric module 102, which remains deactivated (or inoperative) by default, may be configured to biometrically authenticate the person and, upon completion of the biometric authentication 105 (either successfully or unsuccessfully), to deactivate itself and, therefore, to return to its default (deactivated or inoperative) state. This manner, the biometric module 102 remains always inactive and only transitions to activation or active state when (new) person's input is received at the acceptance module 101. The biometric module 102 may be deactivated through, e.g., a deactivation signal 106 triggered by completion of the biometric authentication 105. Completion (or result) of the biometric authentication 105 may include, e.g., authorising the person to access corresponding space or service or the like. Biometric authentication performed by the biometric module 102 may be implemented based on any already known method or technique aimed at that purpose.

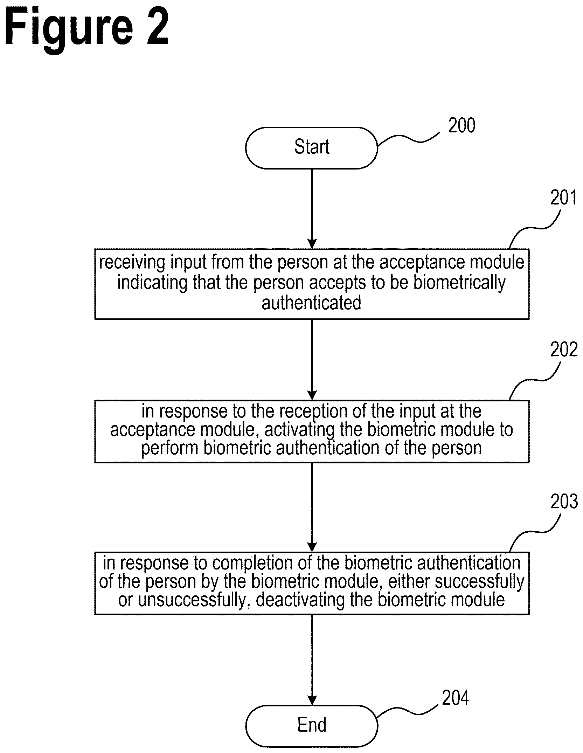

Figure 2 is a flow chart schematically illustrating (authenticating) methods of biometrically authenticating a person, according to examples. As shown in the figure, authenticating methods may be initiated (e.g., at block 200) upon detection of a starting condition. Since authenticating methods according to Figure 2 are performable by or at authenticating systems according to, e.g., Figure 1, number references from said Figure 1 may be reused in following description of Figure 2.

Authenticating methods may further include (e.g., at method-block 201) receiving person's input 103 at the acceptance module 101 indicating acceptance by the person to be biometrically authenticated. This acceptance functionality implemented or implementable at method-block 201 may be performed by, e.g., acceptance module 101 previously described with reference to Figure 1. Functional details and considerations explained about said functionality in relation to acceptance module 101 may thus be similarly attributed or attributable to method-block 201.

Authenticating methods may still further include (e.g., at method-block 202), in response to the input reception, activating the biometric module 102 to biometrically authenticate the person. This activation-and-biometric functionalities implemented or implementable at method-block 202 may be performed by, e.g., acceptance module 101 (activation function) and biometric module 102 (biometric function) previously described with reference to Figure 1. Functional details and considerations explained about said functionalities in relation to acceptance module 101 and biometric module 102, respectively, may thus be similarly attributed or attributable to method-block 202.

Authenticating methods may yet further include (e.g., at method-block 203), in response to completion of the biometric authentication 105, deactivating the biometric module 102. This deactivation functionality implemented or implementable at method-block 203 may be performed by, e.g., biometric module 102 previously described with reference to Figure 1. Functional details and considerations explained about said functionalities in relation to biometric module 102 may thus be similarly attributed or attributable to method-block 203.

Authenticating methods may additionally include transitioning from method-block 203 to method-block 204 to terminate execution of the authenticating method. This termination at block 204 may include, e.g., triggering pertinent action depending on whether the biometric authentication has been successful or unsuccessful. If successful, an authorization for the authenticated person may be produced, and said authorization may finally result in allowance or denial to access corresponding space or service, for example. Otherwise, no authorization for the unsuccessfully authenticated (or non-authenticated) person may be produced, for example.

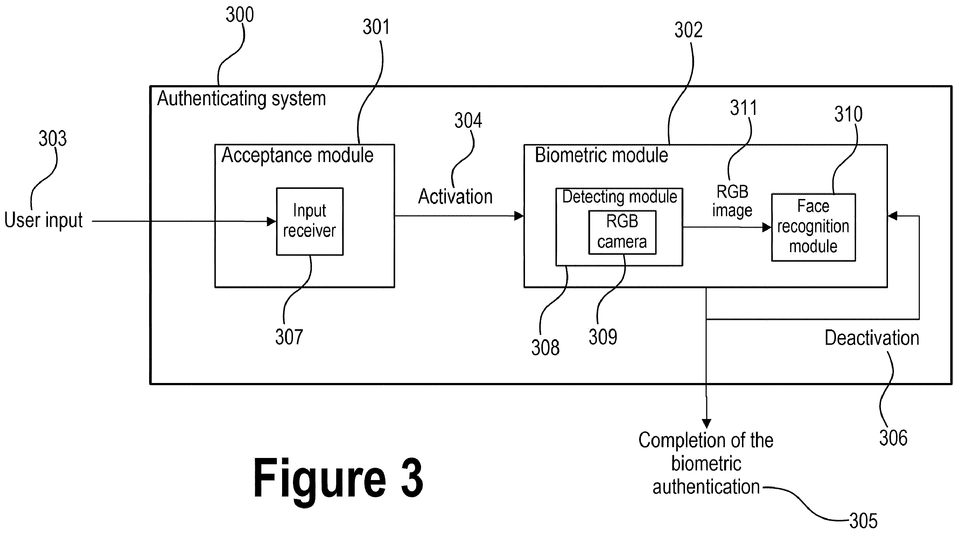

Figure 3 is a block diagram schematically illustrating (authenticating) systems 300 for biometrically authenticating a person, according to other examples. These authenticating systems 300 may be similar to systems 100 according to Figure 1. A difference may be that acceptance module 301 may include an input receiver 307 which may be configured to receive person's input 303 indicating acceptance by the person to be biometrically authenticated. Another difference may be that biometric module 302 may include a detecting module 308 and a face recognition module 310. A further difference may be that detecting module 308 may include a single-channel camera 309 configured to obtain a single-channel image 311 which may be provided to face recognition module 310. In the particular examples depicted, single-channel camera is shown as RGB camera 309 and single-channel image is shown as RGB image 311. As commented in other parts of the disclosure, however, single-channel camera/image may be, e.g., RGB or BW or IR camera/image or any combination thereof. Activation signal 304 and deactivation signal 306 may be similarly implemented as signal 104 and signal 106 of Figure 1, respectively. Completion (or result) of biometric authentication 305 may be similar to completion (or result) of biometric authentication 105 of Figure 1.

The input receiver 307 may be a physical button or switch, or a virtual button or icon on a touch screen, or a proximity sensor activable by hand approach, or any mechanism whose activation may be interpreted as acceptance by the person to be biometrically authenticated. Acceptance to be biometrically authenticated may be indicated by the person in one or more of the following manners: by operating the physical button or switch, by touching the virtual button or icon, by activating the proximity sensor. In some examples, the proximity sensor may be a short range or short distance proximity sensor to ensure that it cannot be activated accidentally by somebody passing through sensor vicinity with no intention of accepting biometric authentication. Upon input reception by the input receiver 307, activation of the biometric module 302 may be implemented through activation signal 304 in similar manner as explained for Figure 1 based on signal 104.

Acceptance module 301 and biometric module 302 and, in particular, input receiver 307 and single-channel camera 309 may be arranged relative to each other in such a manner that an average person can show or expose his/her face to the single-channel camera 309 (biometric module 302) and reach the input receiver 307 (acceptance module 301) by his/her hand simultaneously. Specifically, input receiver 307 (acceptance module 301) and single-channel camera 309 (biometric module 302) may be arranged at a distance (in, e.g., horizontal direction) of between 0 cm and 100 cm to each other. In some examples, said distance may preferably be of between 30 cm and 50 cm to each other.

Detecting module 308 may be configured to detect presence of an object at a predefined distance from the biometric module 302 or, in particular, from the camera 309. Then, in response to said presence detection, face recognition module 310 may proceed to biometrically authenticate the person based on face recognition assuming that face of the person has been shown or exposed to the biometric module 302 or, in particular, to the camera 309. The predefined distance may be of 1 meter or below. Face of the person may also be validated and required to be within a predetermined distance which may be the same as, above or below the predefined distance used to detect presence of the object.

Detecting module 308 may be configured to detect presence of the object at the predefined distance in the following manner. In a first step, a single-channel image may be obtained by the single-channel camera 309 in the detecting module 308. In a second step, a human face may be identified in the obtained single-channel image. And in a third step, presence of the object (identified human face) may be detected at the predefined distance depending on a size of the identified human face. Such first to third steps may be iteratively performed until presence of the object (identified human face) is confirmed. Once presence has been detected, the detecting module 308 may provide the last obtained single-channel image 311 to the face recognition module 310, which may then biometrically authenticate the person depending on the human face identified in said single-channel image 311. The last obtained single-channel image 311 refers to the single-channel image 311 obtained in last iteration of execution block formed by first to third steps, i.e., in the iteration at which presence of the object (identified human face) has been confirmed. Once authentication process has been completed, biometric module 302 may be deactivated through, e.g., deactivation signal 306 to cause return of the biometric module 302 to its default inoperative state.

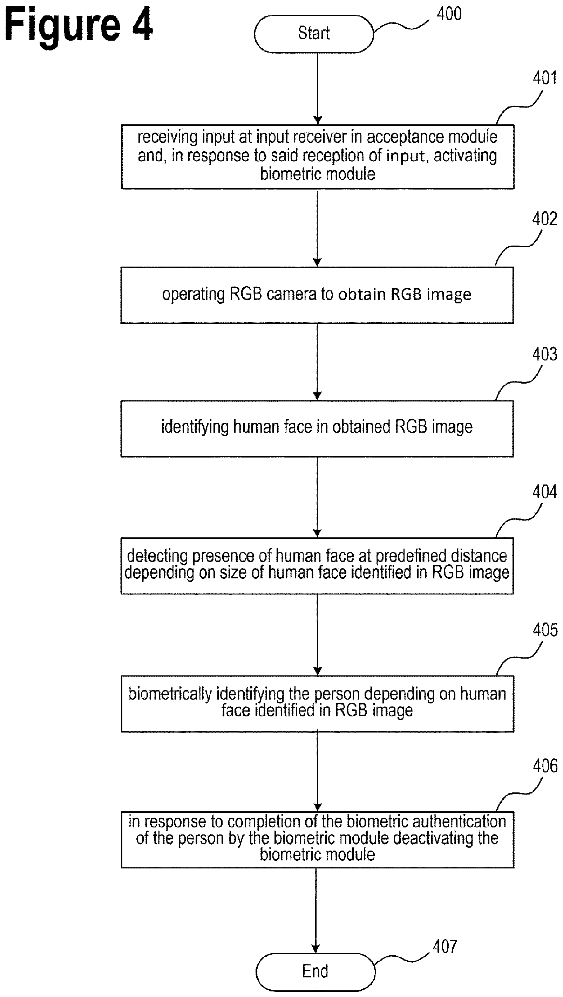

Figure 4 is a flow chart schematically illustrating (authenticating) methods of biometrically authenticating a person, according to other examples. As shown in the figure, authenticating methods may be initiated (e.g., at block 400) upon detection of a starting condition. Since authenticating methods according to Figure 4 are performable by or at authenticating systems according to, e.g., Figure 3, number references from said Figure 3 may be reused in following description of Figure 4.

Authenticating methods may further include (e.g., at method-block 401) receiving person's input 303 at the acceptance module 301 indicating acceptance by the person to be biometrically authenticated. This acceptance functionality implemented or implementable at method-block 401 may be performed by, e.g., acceptance module 301 previously described with reference to Figure 3. Functional details and considerations explained about said functionality in relation to acceptance module 301 may thus be similarly attributed or attributable to method-block 401.

Authenticating methods may still further include (e.g., at method-blocks 402 - 404) detecting presence of an object at predefined distance from biometric module 302. This presence detection may include obtaining a single-channel image 311 through single-channel camera 309 (e.g., at method-block 402), identifying human face in obtained single-channel image 311 (e.g., at method-block 403), and detecting presence of the human face (object) at predefined distance depending on size of the identified human face (e.g., at method-block 404). This detecting functionality implemented or implementable at method-blocks 402 - 404 may be performed by, e.g., detecting module 308 previously described with reference to Figure 3. Functional details and considerations explained about said functionality in relation to detecting module 308 may thus be similarly attributed or attributable to method-blocks 402 - 404.

Authenticating methods may yet further include (e.g., at method-block 405) biometrically authenticating the person depending on human face identified in the single-channel image 311. This biometric functionality implemented or implementable at method-block 405 may be performed by, e.g., face recognition module 310 previously described with reference to Figure 3. Functional details and considerations explained about said functionality in relation to face recognition module 310 may thus be similarly attributed or attributable to method-block 405.

Authenticating methods may furthermore include (e.g., at method-block 406), in response to completion of the biometric authentication, deactivating the biometric module 302. This deactivating functionality implemented or implementable at method-block 406 may be performed by, e.g., biometric module 302 previously described with reference to Figure 3. Functional details and considerations explained about said functionality in relation to biometric module 302 may thus be similarly attributed or attributable to method-block 406.

Authenticating methods may additionally include transitioning from method-block 406 to method-block 407 to terminate execution of the authenticating method. This termination at block 407 may include, e.g., triggering pertinent action depending on whether the biometric authentication has been successful or unsuccessful. If successful, the authenticated person may be authorized to access corresponding space or service, for example. Otherwise, the unsuccessfully authenticated (or non-authenticated) person may be denied to access corresponding space or service, for example.

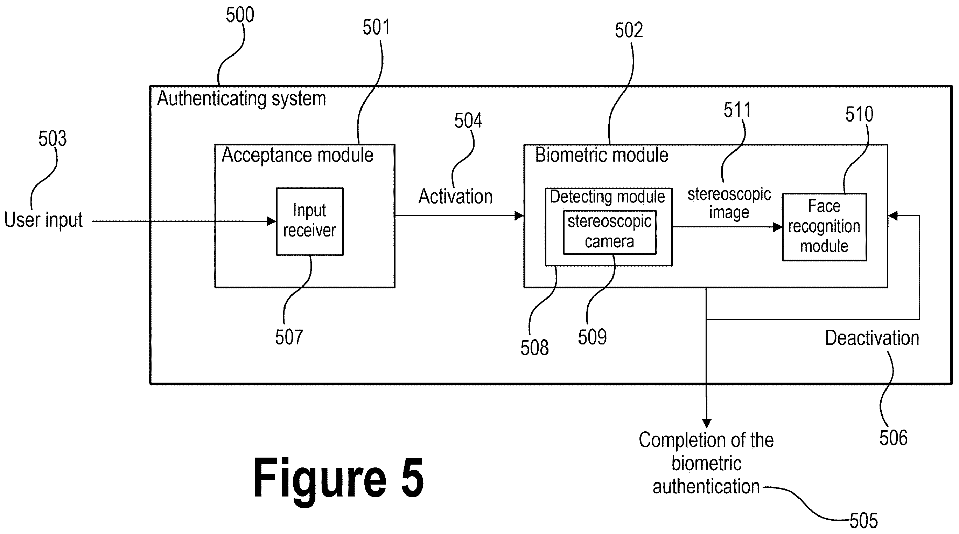

Figure 5 is a block diagram schematically illustrating (authenticating) systems 500 for biometrically authenticating a person, according to further examples. These authenticating systems 500 may be similar to systems 300 according to Figure 3. A difference may be that detecting module 508 may include a stereoscopic camera 509 configured to obtain a stereoscopic image 511 which may be provided to face recognition module 510. Acceptance module 501 may be similar to acceptance module 301 of Figure 3. Activation signal 504 and deactivation signal 506 may be similarly implemented as signal 304 and signal 306 of Figure 3, respectively. Completion (or result) of biometric authentication 505 may be similar to completion (or result) of biometric authentication 305 of Figure 3.

Detecting module 508 may be configured to detect presence of an object at a predefined distance from the biometric module 502 or, in particular, from the camera 509. Then, in response to said presence detection, face recognition module 510 may proceed to biometrically authenticate the person based on face recognition assuming that face of the person has been shown or exposed to the biometric module 502 or, in particular, to the camera 509. The predefined distance may be of 1 meter or below. Face of the person may also be validated and required to be within predetermined distance which may be the same as, above or below the predefined distance used to detect presence of the object.

Detecting module 508 may be configured to detect presence of the object at the predefined distance in following manner. In first stage, a stereoscopic image 511 may be obtained by the stereoscopic camera 509 in the detecting module 508, the stereoscopic image 511 including a bidimensional image and a depth map. And in second stage, presence of the object may be detected at the predefined distance depending on the depth map in the stereoscopic image 511. Such first and second stages may be iteratively performed until presence of the object results confirmed. Once presence has been detected, the detecting module 508 may provide the last obtained stereoscopic image 511 to the face recognition module 510. The last obtained stereoscopic image 511 refers to the stereoscopic image 511 obtained in last iteration of execution block formed by first and second stages, i.e., in the iteration at which presence of the object has been confirmed.

Face recognition module 510 may be configured to identify a human face in the bidimensional image included in the stereoscopic image 511, and to biometrically authenticate the person depending on said identified human face. Once authentication process has been completed, biometric module 502 may be deactivated through, e.g., deactivation signal 506 to cause return of the biometric module 502 to its default inoperative state.

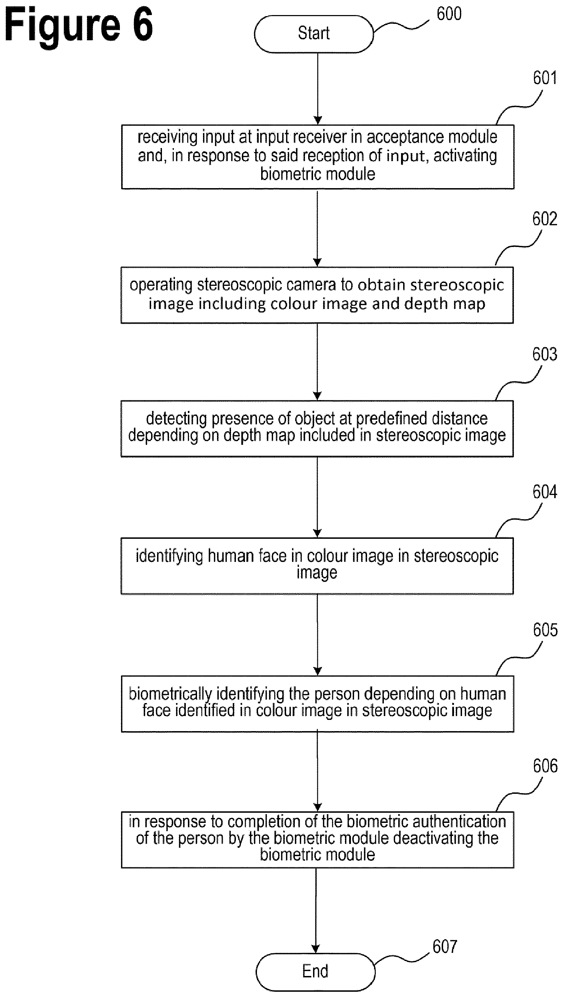

Figure 6 is a flow chart schematically illustrating (authenticating) methods of biometrically authenticating a person, according to further examples. As shown in the figure, authenticating methods may be initiated (e.g., at block 600) upon detection of a starting condition. Since authenticating methods according to Figure 6 are performable by or at authenticating systems according to, e.g., Figure 5, number references from said Figure 5 may be reused in following description of Figure 6.

Authenticating methods may further include (e.g., at method-block 601) receiving person's input 503 at the acceptance module 501 indicating acceptance by the person to be biometrically authenticated. This acceptance functionality implemented or implementable at method-block 601 may be performed by, e.g., acceptance module 501 previously described with reference to Figure 5. Functional details and considerations explained about said functionality in relation to acceptance module 501 may thus be similarly attributed or attributable to method-block 601.

Authenticating methods may still further include (e.g., at method-blocks 602 and 603) detecting presence of an object at predefined distance from biometric module 502. This presence detection may include operating stereoscopic camera 509 to obtain stereoscopic image 511 including bidimensional image and depth map (method-block 602), and detecting presence of the object at predefined distance depending on said depth map (method-block 603). This detecting functionality implemented or implementable at method-blocks 602 and 603 may be performed by, e.g., detecting module 508 previously described with reference to Figure 5. Functional details and considerations explained about said functionality in relation to detecting module 508 may thus be similarly attributed or attributable to method-blocks 602 and 603.

Authenticating methods may yet further include (e.g., at method-blocks 604 and 605) biometrically authenticating the person depending on the bidimensional image in the stereoscopic image 511. In particular, said biometric authentication may be performed by identifying a human face in the bidimensional image included in the stereoscopic image 511 and biometrically authenticating the person depending on said identified human face. This biometric functionality implemented or implementable at method-blocks 604 and 605 may be performed by, e.g., face recognition module 510 previously described with reference to Figure 5. Functional details and considerations explained about said functionality in relation to face recognition module 510 may thus be similarly attributed or attributable to method-blocks 604 and 605.

Authenticating methods may furthermore include (e.g., at method-block 606), in response to completion of the biometric authentication, deactivating the biometric module 502. This deactivating functionality implemented or implementable at method-block 606 may be performed by, e.g., biometric module 502 previously described with reference to Figure 5. Functional details and considerations explained about said functionality in relation to biometric module 502 may thus be similarly attributed or attributable to method-block 606.

Authenticating methods may additionally include transitioning from method-block 606 to method-block 607 to terminate execution of the authenticating method. This termination at block 607 may include, e.g., triggering pertinent action depending on whether the biometric authentication has been successful or unsuccessful. If successful, the authenticated person may be authorized to access corresponding space or service, for example. Otherwise, the unsuccessfully authenticated (or non-authenticated) person may be denied to access corresponding space or service, for example.

As used herein, the term "module" or "unit" may be understood to refer to software, firmware, hardware and/or various combinations thereof. It is noted that the modules are exemplary. The modules may be combined, integrated, separated, and/or duplicated to support various applications. Also, a function described herein as being performed by a particular module may be performed by one or more other modules and/or by one or more other devices instead of or in addition to the function performed by the described particular module.

The modules may be implemented across multiple devices, associated or linked to corresponding authenticating systems proposed herein, and/or to other components that may be local or remote to one another. Additionally, the modules may be moved from one device and added to another device, and/or may be included in both devices, associated to corresponding authenticating systems proposed herein. Any software implementations may be tangibly embodied in one or more storage media, such as, e.g., a memory device, a floppy disk, a compact disk (CD), a digital versatile disk (DVD), or other devices that may store computer code.

Authenticating systems according to present disclosure may be implemented by computing means, electronic means or a combination thereof. The computing means may be a set of instructions (e.g., a computer program) and then authenticating systems may comprise a memory and a processor, embodying said set of instructions stored in the memory and executable by the processor. These instructions may comprise functionality or functionalities to execute corresponding authenticating methods such as, e.g., the ones described in other parts of the disclosure.

In authenticating systems implemented only by electronic means, a controller of the system may be, for example, a CPLD (Complex Programmable Logic Device), an FPGA (Field Programmable Gate Array) or an ASIC (Application-Specific Integrated Circuit).

In authenticating systems that are a combination of electronic and computing means, the computing means may be a set of instructions (e.g., a computer program) and the electronic means may be any electronic circuit capable of implementing corresponding steps of authenticating methods proposed herein, such as those described in other parts of the disclosure.

The computer program(s) may be embodied in/on a storage medium (for example, a CD-ROM, a DVD, a USB drive, a computer memory or a read-only memory) or carried on a carrier signal (for example, on an electrical or optical carrier signal).

The computer program(s) may be in the form of source code, object code, a code intermediate source and object code such as in partially compiled form, or in any other form suitable for use in implementing authenticating methods according to present disclosure. The carrier may be any entity or device capable of carrying the computer program(s).

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program(s) is/are embodied in a signal that may be conveyed directly by a cable or other device or means, the carrier may be constituted by such cable or other device or means. Alternatively, the carrier may be an integrated circuit in which the computer program(s) is/are embedded, the integrated circuit being adapted for performing, or for use in the performance of, authenticating methods proposed herein.

Although only a number of examples have been disclosed herein, other alternatives, modifications, uses and/or equivalents thereof are possible. Furthermore, all possible combinations of the described examples are also covered. Thus, the scope of the disclosure should not be limited by particular examples, but it should be determined only by a fair reading of the claims that follow.

## Claims

1. Method of biometrically authenticating a person by a system including an acceptance module and a biometric module which remains in a default deactivated state, the method comprising:
receiving input from the person at the acceptance module indicating that the person accepts to be biometrically authenticated;
in response to the reception of the input at the acceptance module, activating the biometric module to perform biometric authentication of the person; and
in response to completion of the biometric authentication of the person by the biometric module, triggering a deactivation signal and returning the biometric module to its default deactivated state based on the deactivation signal.

2. Method of biometrically authenticating a person according to claim 1, wherein the acceptance module includes either
a physical button or switch whose operation indicates acceptance by the person to be biometrically authenticated, or
a virtual button or icon on a touch screen whose touching indicates acceptance by the person to be biometrically authenticated, or
a proximity sensor activable by hand approach whose activation indicates acceptance by the person to be biometrically authenticated.

3. Method of biometrically authenticating a person according to claim 2, wherein the proximity sensor is a short range or short distance proximity sensor.

4. Method of biometrically authenticating a person according to any of claims 1 to 3, wherein the acceptance module includes an authentication-factor reader or detector whose operation by reading or detecting an authentication-factor of the person indicates acceptance by the person to be biometrically authenticated.

5. Method of biometrically authenticating a person according to claim 4, wherein the authentication-factor reader or detector is a bidimensional code reader or a QR reader or an NFC reader or any combination thereof.

6. Method of biometrically authenticating a person according to any of claims 1 to 5, wherein the biometric module is based on face recognition; and wherein the acceptance module and the biometric module are arranged to each other in such a manner that an average person can show or expose his/her face to the biometric module and reach the acceptance module by his/her hand simultaneously.

7. Method of biometrically authenticating a person according to claim 6, wherein the acceptance module and the biometric module are arranged at a distance of between 0 cm and 100 cm to each other, preferably between 30 cm and 50 cm to each other.

8. Method of biometrically authenticating a person according to any of claims 6 or 7, the performing of the biometric authentication of the person includes:
detecting presence of an object at a predefined distance from the biometric module; and
in response to the detecting of the presence of the object, biometrically authenticating the person based on face recognition assuming that face of the person is shown or exposed to the biometric module.

9. Method of biometrically authenticating a person according to claim 8, wherein the detecting of the presence of the object at the predefined distance from the biometric module includes:
obtaining, by a single-channel camera in the biometric module, a single-channel image;
identifying a human face in the single-channel image; and
detecting the presence of the human face at the predefined distance depending on a size of the identified human face.

10. Method of biometrically authenticating a person according to claim 9, wherein the biometrically authenticating of the person based on face recognition includes:
biometrically authenticating the person depending on the human face identified in the single-channel image.

11. Method of biometrically authenticating a person according to claim 8, wherein the detecting of the presence of the object at the predefined distance from the biometric module includes:
obtaining, by a stereoscopic camera in the biometric module, a stereoscopic image including a bidimensional image and a depth map; and
detecting the presence of the object at the predefined distance depending on the depth map included in the stereoscopic image.

12. Method of biometrically authenticating a person according to claim 11, wherein the biometrically authenticating of the person based on face recognition includes:
identifying a human face in the bidimensional image included in the stereoscopic image; and
biometrically authenticating the person depending on the human face identified in the bidimensional image included in the stereoscopic image.

13. System for biometrically authenticating a person, comprising:
an acceptance module configured to receive input from the person indicating that the person accepts to be biometrically authenticated and, in response to said reception of the input, to activate a biometric module to perform biometric authentication of the person; and
the biometric module configured to remain in a default deactivated state, to perform biometric authentication of the person when activated by the acceptance module and, in response to completion of the biometric authentication of the person, to return to its default deactivated based on a deactivation signal that is triggered by completion of the biometric authentication.

14. Authentication device for authenticating a person, comprising:
a system according to claim 13 for biometrically authenticating a person; and
one or more alternative systems for authenticating a person non-biometrically.

15. Computer program comprising program instructions for causing a computing system to perform a method according to any of claims 1 to 12.

## Patentansprüche

1. Verfahren zum biometrischen Authentifizieren einer Person durch ein System, das ein Zustimmungsmodul und ein biometrisches Modul beinhaltet, das in einem standardmäßigen deaktivierten Zustand verbleibt, wobei das Verfahren Folgendes umfasst:
empfangen einer Eingabe von der Person am Zustimmungsmodul, aus der hervorgeht, dass die Person Ihre Zustimmung zur Durchführung ihrer biometrischen Authentifizierung gibt;
als Reaktion auf den Empfang der Eingabe am Zustimmungsmodul, aktivieren des biometrischen Moduls, um eine biometrische Authentifizierung der Person durchzuführen; und
als Reaktion auf den Abschluss der biometrischen Authentifizierung der Person durch das biometrische Modul, auslösen eines Deaktivierungssignals und zurückführen des biometrischen Moduls in seinen standardmäßigen deaktivierten Zustand auf Grundlage des Deaktivierungssignals.

2. Verfahren zum biometrischen Authentifizieren einer Person nach Anspruch 1, wobei das Zustimmungsmodul Folgendes umfasst: entweder
eine physische Taste oder einen physischen Schalter, dessen Betätigung auf die Zustimmung durch die biometrisch zu authentifizierende Person hinweist, oder
eine virtuelle Taste oder ein virtuelles Symbol auf einem Touchscreen, dessen Berührung auf die Zustimmung durch die biometrisch zu authentifizierenden Person hinweist, oder
einen von Hand aktivierbaren Näherungsschalter, dessen Aktivierung auf die Zustimmung durch die biometrisch zu authentifizierende Person hinweist.

3. Verfahren zum biometrischen Authentifizieren einer Person nach Anspruch 2, wobei der Näherungsschalter ein Kurzstrecken- oder Kurzwegnäherungsschalter ist.

4. Verfahren zum biometrischen Authentifizieren einer Person nach einem der Ansprüche 1 bis 3, wobei das Zustimmungsmodul einen Authentifizierungsfaktorleser oder -detektor umfasst, dessen Betätigung durch das Lesen oder das Erfassen eines Authentifizierungsfaktors der Person auf die Zustimmung durch die biometrisch zu authentifizierende Person hinweist.

5. Verfahren zum biometrischen Authentifizieren einer Person nach Anspruch 4, wobei der Authentifizierungsfaktorleser oder -detektor ein zweidimensionaler Codeleser oder ein QR-Leser oder ein NFC-Leser oder eine Kombination davon ist.

6. Verfahren zum biometrischen Authentifizieren einer Person nach einem der Ansprüche 1 bis 5, wobei das biometrische Modul auf Gesichtserkennung basiert; und wobei das Zustimmungsmodul und das biometrische Modul so zueinander angeordnet sind, dass eine durchschnittliche Person ihr Gesicht dem biometrischen Modul zeigen oder aussetzen und das Zustimmungsmodul gleichzeitig mit ihrer Hand erreichen kann.

7. Verfahren zum biometrischen Authentifizieren einer Person nach Anspruch 6, wobei das Zustimmungsmodul und das biometrische Modul in einem Abstand von zwischen 0 cm und 100 cm, vorzugsweise von zwischen 30 cm und 50 cm zueinander angeordnet sind.

8. Verfahren zum biometrischen Authentifizieren einer Person nach einem der Ansprüche 6 oder 7, wobei das Durchführen der biometrischen Authentifizierung der Person Folgendes beinhaltet:
erfassen der Anwesenheit eines Objekts in einem vordefinierten Abstand von dem biometrischen Modul; und
als Reaktion auf das Erfassen der Anwesenheit des Objekts, biometrisches Authentifizieren der Person auf Grundlage der Gesichtserkennung unter der Annahme, dass das Gesicht der Person gezeigt oder dem biometrischen Modul ausgesetzt ist.

9. Verfahren zum biometrischen Authentifizieren einer Person nach Anspruch 8, wobei das Erfassen der Anwesenheit des Objekts in dem vordefinierten Abstand von dem biometrischen Modul Folgendes beinhaltet:
erhalten eines Einzelkanalbilds durch eine Einzelkanalkamera in dem biometrischen Modul;
identifizieren eines menschlichen Gesichts in dem Einzelkanalbild; und
erfassen der Anwesenheit des menschlichen Gesichts in der vordefinierten Entfernung in Abhängigkeit von einer Größe des identifizierten menschlichen Gesichts.

10. Verfahren zum biometrischen Authentifizieren einer Person nach Anspruch 9, wobei das biometrische Authentifizieren der Person auf der Grundlage der Gesichtserkennung Folgendes beinhaltet:
biometrisches Authentifizieren der Person in Abhängigkeit von dem im Einzelkanalbild identifizierten menschlichen Gesicht.

11. Verfahren zum biometrischen Authentifizieren einer Person nach Anspruch 8, wobei das Erfassen der Anwesenheit des Objekts in dem vordefinierten Abstand von dem biometrischen Modul Folgendes beinhaltet:
erhalten eines stereoskopischen Bildes, das ein zweidimensionales Bild und eine Tiefenmap beinhaltet, durch eine stereoskopische Kamera in dem biometrischen Modul; und
erfassen der Anwesenheit des Objekts in der vordefinierten Entfernung in Abhängigkeit von der in dem stereoskopischen Bild enthaltenen Tiefenmap.

12. Verfahren zum biometrischen Authentifizieren einer Person nach Anspruch 11, wobei das biometrische Authentifizieren der Person auf der Grundlage der Gesichtserkennung Folgendes beinhaltet:
identifizieren eines menschlichen Gesichts in dem zweidimensionalen Bild, das in dem stereoskopischen Bild enthalten ist; und
biometrisches Authentifizieren der Person in Abhängigkeit von dem in dem zweidimensionalen Bild identifizierten menschlichen Gesicht, das in dem stereoskopischen Bild enthalten ist.

13. System zur biometrischen Authentifizierung einer Person, umfassend:
ein Zustimmungsmodul, das dazu konfiguriert ist, eine Eingabe von der Person zu empfangen, aus der hervorgeht, dass die Person Ihre Zustimmung zur Durchführung ihrer biometrischen Authentifizierung gibt, und als Reaktion auf den Empfang der Eingabe ein biometrisches Modul zu aktivieren, um eine biometrische Authentifizierung der Person durchzuführen; und
das biometrische Modul, das dazu konfiguriert ist, in einem standardmäßigen deaktivierten Zustand zu verbleiben, eine biometrische Authentifizierung der Person durchzuführen, wenn es durch das Zustimmungsmodul aktiviert wird, und als Reaktion auf den Abschluss der biometrischen Authentifizierung der Person, auf Grundlage des Deaktivierungssignals, das durch den Abschluss der biometrischen Authentifizierung ausgelöst wird, zu seinem standardmäßigen deaktivierten zurückzukehren.

14. Authentifizierungsvorrichtung zum Authentifizieren einer Person, umfassend:
ein System nach Anspruch 13 zum biometrischen Authentifizieren einer Person; und
ein oder mehrere alternative Systeme zum nicht-biometrischen Authentifizieren einer Person.

15. Computerprogramm umfassend Programmanweisungen zum Veranlassen eines Computersystems, ein Verfahren nach einem der Ansprüche 1 bis 12 durchzuführen.

## Revendications

1. Procédé d'authentification biométrique d'une personne par un système comprenant un module d'acceptation et un module biométrique qui reste dans un état désactivé par défaut, le procédé comprenant :
recevoir l'entrée de la personne au module d'acceptation indiquant que la personne accède à la réalisation de son authentification biométrique ;
en réponse à la réception de l'entrée au module d'acceptation, activer le module biométrique pour effectuer l'authentification biométrique de la personne ; et
en réponse à l'achèvement de l'authentification biométrique de la personne par le module biométrique, déclencher un signal de désactivation et ramener le module biométrique à son état désactivé par défaut sur la base du signal de désactivation.

2. Procédé d'authentification biométrique d'une personne selon la revendication 1, dans lequel le module d'acceptation comprend
un bouton ou un interrupteur physique dont le fonctionnement indique que la personne accède à la réalisation de son authentification biométrique, ou bien
un bouton ou une icône virtuelle sur un écran tactile dont le toucher indique que la personne accède à la réalisation de son authentification biométrique, ou bien
un capteur de proximité activable à la main dont l'activation indique que la personne accède à la réalisation de son authentification biométrique.

3. Procédé d'authentification biométrique d'une personne selon la revendication 2, dans lequel le capteur de proximité est un capteur de proximité à courte portée ou à courte distance.

4. Procédé d'authentification biométrique d'une personne selon l'une quelconque des revendications 1 à 3, dans lequel le module d'acceptation comprend un lecteur ou un détecteur de facteur d'authentification dont le fonctionnement par la lecture ou la détection d'un facteur d'authentification de la personne indique que la personne accède à la réalisation de son authentification biométrique.

5. Procédé d'authentification biométrique d'une personne selon la revendication 4, dans lequel le lecteur ou le détecteur de facteur d'authentification est un lecteur de code bidimensionnel ou un lecteur QR ou un lecteur NFC ou une combinaison quelconque de ceux-ci.

6. Procédé d'authentification biométrique d'une personne selon l'une quelconque des revendications 1 à 5, dans lequel le module biométrique est basé sur la reconnaissance faciale ; et dans lequel le module d'acceptation et le module biométrique sont agencés l'un par rapport à l'autre de telle sorte qu'une personne moyenne peut montrer ou exposer son visage au module biométrique et atteindre le module d'acceptation par sa main simultanément.

7. Procédé d'authentification biométrique d'une personne selon la revendication 6, dans lequel le module d'acceptation et le module biométrique sont disposés à une distance d'entre 0 cm et 100 cm l'un de l'autre, de préférence entre 30 cm et 50 cm l'un de l'autre.

8. Procédé d'authentification biométrique d'une personne selon l'une quelconque des revendications 6 ou 7, l'exécution de l'authentification biométrique de la personne comprend :
détecter la présence d'un objet à une distance prédéfinie du module biométrique ; et
en réponse à la détection de la présence de l'objet, effectuer l'authentification biométrique de la personne sur la base de la reconnaissance faciale en supposant que le visage de la personne est montré ou exposé au module biométrique.

9. Procédé d'authentification biométrique d'une personne selon la revendication 8, dans lequel la détection de la présence de l'objet à la distance prédéfinie du module biométrique comprend :
obtention, par une caméra à canal unique dans le module biométrique, d'une image à canal unique ;
identifier un visage humain dans l'image à canal unique ; et
détecter la présence du visage humain à la distance prédéfinie en fonction d'une taille du visage humain identifié.

10. Procédé d'authentification biométrique d'une personne selon la revendication 9, dans lequel l'authentification biométrique de la personne sur la base de la reconnaissance faciale comprend :
authentifier biométriquement la personne en fonction du visage humain identifié dans l'image à canal unique.

11. Procédé d'authentification biométrique d'une personne selon la revendication 8, dans lequel la détection de la présence de l'objet à la distance prédéfinie du module biométrique comprend :
obtenir, par une caméra stéréoscopique dans le module biométrique, une image stéréoscopique comprenant une image bidimensionnelle et une carte de profondeur ; et
détecter la présence de l'objet à la distance prédéfinie en fonction de la carte de profondeur incluse dans l'image stéréoscopique.

12. Procédé d'authentification biométrique d'une personne selon la revendication 11, dans lequel l'authentification biométrique de la personne sur la base de la reconnaissance faciale comprend :
identifier un visage humain dans l'image bidimensionnelle incluse dans l'image stéréoscopique ; et
authentifier biométriquement la personne en fonction du visage humain identifié dans l'image bidimensionnelle incluse dans l'image stéréoscopique.

13. Système d'authentification biométrique d'une personne, comprenant :
un module d'acceptation configuré pour recevoir une entrée de la personne indiquant que la personne accède à la réalisation de son authentification biométrique et, en réponse à ladite réception de l'entrée, activer un module biométrique pour effectuer une authentification biométrique de la personne ; et
le module biométrique étant configuré pour rester dans un état désactivé par défaut, pour effectuer une authentification biométrique de la personne lorsqu'il est activé par le module d'acceptation et, en réponse à l'achèvement de l'authentification biométrique de la personne, revenir à son état désactivé par défaut sur la base du signal de désactivation qui est déclenché par l'achèvement de l'authentification biométrique.

14. Dispositif d'authentification pour l'authentification d'une personne, comprenant :
un système selon la revendication 13 pour l'authentification biométrique d'une personne ; et
un ou plusieurs systèmes alternatifs pour authentifier une personne de manière non biométrique.

15. Programme informatique comprenant des instructions de programme pour amener un système informatique à exécuter un procédé selon l'une quelconque des revendications 1 à 12.
